(19) Europäisches Patentamt
European Patent Office
Office européen des brevets

(11) EP 4 455 187 A1

(12) EUROPEAN PATENT APPLICATION
published in accordance with Art. 153(4) EPC

(43) Date of publication:
30.10.2024 Bulletin 2024/44

(21) Application number: 22912028.2

(22) Date of filing: 23.12.2022

(51) International Patent Classification (IPC):
*C08G 64/30* (2006.01) *C08G 64/14* (2006.01)
*C08L 69/00* (2006.01)

(52) Cooperative Patent Classification (CPC):
C08G 64/14; C08G 64/30; C08L 69/00

(86) International application number:
PCT/KR2022/021198

(87) International publication number:
WO 2023/121395 (29.06.2023 Gazette 2023/26)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 24.12.2021 KR 20210187813

(71) Applicant: Samyang Corporation
Jongno-gu
Seoul 03129 (KR)

(72) Inventors:
- YOO, Seung Hyun
Daejeon 34637 (KR)
- IM, Jun Seop
Hwaseong-si Gyeonggi-do 18496 (KR)
- NOH, Jae Guk
Daejeon 34185 (KR)
- SONG, Gwang Seok
Jeonju-si Jeollabuk-do 55021 (KR)
- CHANG, Min Jung
Bucheon-si Gyeonggi-do 14472 (KR)

(74) Representative: Schrell, Andreas et al
Gleiss Große Schrell und Partner mbB
Patentanwälte Rechtsanwälte
Leitzstrasse 45
70469 Stuttgart (DE)

# (54) BIODEGRADABLE POLYCARBONATE COPOLYMER COMPRISING UNITS DERIVED FROM ANHYDROSUGAR ALCOHOL, ANHYDROSUGAR ALCOHOL-ALKYLENE GLYCOL, AND AROMATIC DIOL, METHOD FOR PRODUCING SAME, AND MOLDED PRODUCT COMPRISING SAME

(57) The present invention relates to a polycarbonate copolymer, a method for producing same, and a molded product comprising same, and more specifically, to: a polycarbonate copolymer exhibiting biodegradability and improved tensile strength and elongation compared to conventional polycarbonate copolymers due to including repeating units derived from a carbonate diester component and a diol component containing anhydrosugar alcohol, anhydrosugar alcohol-alkylene glycol, and aromatic diol in a specific content ratio; a method for producing the polycarbonate copolymer; and a molded article comprising the polycarbonate copolymer.

EP 4 455 187 A1

## Description

### TECHNICAL FIELD

The present invention relates to a polycarbonate copolymer and a method for preparing the same, and a molded article comprising the same, and more specifically, it relates to a polycarbonate copolymer which comprises repeating units derived from a diol component comprising anhydrosugar alcohol, anhydrosugar alcohol-alkylene glycol and aromatic diol with specific amount ratio, and a carbonic acid diester component, and thereby shows improved tensile strength and elongation as compared with conventional polycarbonate copolymers, and at the same time has biodegradability, a method for preparing the same, and a molded article comprising the same.

### BACKGROUND ART

Polycarbonate resin is a general-purpose thermoplastic engineering plastic with a glass transition temperature of around 150°C, and has excellent mechanical properties such as tensile strength and impact strength, etc., and good dimensional stability, heat resistance and optical transparency.
Polycarbonate is usually prepared by condensation-polymerization of phosgene and bisphenol A which is a petroleum-based raw material. However, due to various reasons such as accelerated depletion of petroleum resources, demand to reduce greenhouse gas emissions according to climate change, rise of raw material prices, and increasing need for recyclable raw materials, a method for partially or completely replacing raw materials for preparing polycarbonate with environmentally friendly components is being requested.
Anhydrosugar alcohol is an environmentally friendly material derived from natural resources, and can be produced by dehydration reaction of hydrogenated sugar (for example, hexitol) derived from natural products such as starch. Hydrogenated sugar (also referred to as "sugar alcohol") means a compound obtained by adding hydrogen to the reductive end group in sugar, and generally has a chemical formula of $HOCH_2(CHOH)_nCH_2OH$ wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials. As such, anhydrosugar alcohol is receiving much interest because of its wide applicability, and the level of practical industrial application thereof is gradually increasing.
Technologies for preparing polycarbonate by utilizing anhydrosugar alcohol have been suggested. For instance, Korean Laid-open Patent Publication No. 10-2009-0018788 discloses a technology for preparing polycarbonate copolymer by using isosorbide, which is an anhydrosugar alcohol, and cyclic diol compound as diol component. In addition, Korean Patent No. 10-1080669 discloses a technology for preparing polycarbonate copolymer by using isosorbide and linear diol compound as diol component.
However, in spite of improvement in environmental friendliness, polycarbonate copolymers prepared by the above prior arts are hard to be utilized actually as engineering plastic applications because of poor mechanical properties (particularly, tensile strength and/or elongation).
Therefore, it has been requested to develop a technology which utilizes anhydrosugar alcohol as raw material and so enhances environmental friendliness and imparts biodegradability, and at the same time, improves mechanical properties such as tensile strength and elongation, etc. as compared with prior arts so as to prepare polycarbonate copolymer that can be utilized actually as engineering plastic applications.

### PROBLEMS TO BE SOLVED

The purpose of the present invention is to provide a polycarbonate copolymer which comprises repeating units derived from anhydrosugar alcohol and derivative thereof, and so has good environmental friendliness and biodegradability, and at the same time, shows remarkably improved mechanical properties such as tensile strength and elongation, etc. as compared with the existing polycarbonate resin containing anhydrosugar alcohol, a method for preparing the same, and a molded article comprising the same.

### TECHNICAL MEANS

In order to achieve the above purpose, the present invention provides a polycarbonate copolymer comprising: repeating units derived from a diol component; and repeating units derived from a carbonic acid diester component; wherein the diol component comprises, based on total 100 mol% of the diol component, (a) 0.3 to 66.9 mol% of anhydrosugar alcohol, (b) 0.3 to 56.9 mol% of anhydrosugar alcohol-alkylene glycol and (c) 32.1 to 99.4 mol% of aromatic diol.
According to the other aspect, the present invention provides a method for preparing a polycarbonate copolymer,

comprising: reacting a mixture comprising a diol component and a carbonic acid diester component in the presence of polymerization catalyst, wherein the diol component comprises, based on total 100 mol% of the diol component, (a) 0.3 to 66.9 mol% of anhydrosugar alcohol, (b) 0.3 to 56.9 mol% of anhydrosugar alcohol-alkylene glycol and (c) 32.1 to 99.4 mol% of aromatic diol.

According to another aspect, the present invention provides a molded article comprising the polycarbonate copolymer of the present invention.

## EFFECT OF THE INVENTION

The polycarbonate copolymer according to the present invention present invention has good environmental friendliness and biodegradability, and at the same time, shows remarkably improved mechanical properties (particularly, tensile strength and elongation, etc.), as compared with the existing polycarbonate copolymer containing anhydrosugar alcohol.

## CONCRETE MODE FOR CARRYING OUT THE INVENTION

The present invention is explained in more detail below.

The polycarbonate copolymer of the present invention comprises repeating units derived from a diol component which comprises, based on total 100 mol% of the diol component, (a) 0.3 to 66.9 mol% of anhydrosugar alcohol, (b) 0.3 to 56.9 mol% of anhydrosugar alcohol-alkylene glycol and (c) 32.1 to 99.4 mol% of aromatic diol; and repeating units derived from a carbonic acid diester component.

### [Diol component]

### (a) Anhydrosugar alcohol

In the present invention, the anhydrosugar alcohol can be monoanhydrosugar alcohol, dianhydrosugar alcohol or mixture thereof, and can be obtained in a procedure for preparing anhydrosugar alcohol by dehydration reaction of hydrogenated sugar. Hydrogenated sugar (also referred to as "sugar alcohol") means a compound obtained by adding hydrogen to the reductive end group in sugar, and generally has a chemical formula of $HOCH_2(CHOH)_nCH_2OH$ (wherein n is an integer of 2 to 5), and according to the number of carbon atoms, it is classified into tetritol, pentitol, hexitol and heptitol (4, 5, 6 and 7 carbon atoms, respectively). Among them, hexitol having 6 carbon atoms includes sorbitol, mannitol, iditol, galactitol, etc.

The monoanhydrosugar alcohol is an anhydrosugar alcohol formed by removing one molecule of water from inside of the hydrogenated sugar, and it has a tetraol form with four hydroxyl groups in the molecule. The kind of the monoanhydrosugar alcohol that can be used in the present invention is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or mixture of two or more of the foregoing.

The dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present. The kind of the dianhydrosugar alcohol that can be used in the present invention is not especially limited, and it may be preferably dianhydrohexitol, and more concretely 1,4:3,6-dianhydrohexitol. The 1,4:3,6-dianhydrohexitol may be isosorbide (1,4:3,6-dianhydrosorbitol), isomannide (1,4:3,6-dianhydromannitol), isoidide (1,4:3,6-dianhydroiditol) or mixture of two or more of the foregoing, and more preferably may be isosorbide.

The amount of the anhydrosugar alcohol in the diol component comprised as repeating units in the polycarbonate copolymer of the present invention is 0.3 to 66.9 mol%, based on total 100 mol% of the diol component. If the amount of the anhydrosugar alcohol in the diol component, based on total 100 mol% of the diol component, is less than 0.3 mol%, the tensile strength of the copolymer becomes poor, and to the contrary, if it is greater than 66.9 mol%, the tensile strength and elongation of the copolymer become poor.

In an embodiment, the amount of the anhydrosugar alcohol in the diol component, based on total 100 mol% of the diol component, may be 0.3 mol% or more, 0.4 mol% or more, or 0.5 mol% or more, and also it may be 66.9 mol% or less, 66 mol% or less, 65 mol% or less, 64 mol% or less, 63 mol% or less, 62 mol% or less, 61 mol% or less, 60 mol% or less, 59 mol% or less, 58 mol% or less, 57 mol% or less, 56 mol% or less, or 55 mol% or less.

**(b) Anhydrosugar alcohol-alkylene glycol**

In the present invention, the anhydrosugar alcohol-alkylene glycol may be obtained by addition reaction of anhydrosugar alcohol and alkylene oxide.

In an embodiment, the alkylene oxide may be a linear alkylene oxide having 2 to 18 carbons or a branched alkylene oxide having 3 to 18 carbons, and more concretely, it may be ethylene oxide, propylene oxide or a combination thereof.

In the present invention, the "anhydrosugar alcohol-alkylene glycol" is an adduct obtained by reacting terminal hydroxyl group(s) (for example, at one or more ends) of monoanhydrosugar alcohol or dianhydrosugar alcohol with alkylene oxide (for example, C2 to C18 alkylene oxide, and more concretely, ethylene oxide, propylene oxide or a mixture thereof), and it means a compound in a form wherein hydrogen(s) of hydroxyl group(s) (for example, at one or more ends) of monoanhydrosugar alcohol or dianhydrosugar alcohol is(are) substituted with hydroxyalkyl group(s) which is a ring-opened form of alkylene oxide.

In an embodiment, the anhydrosugar alcohol-alkylene glycol may be a compound represented by the following formula A.

[Formula A]

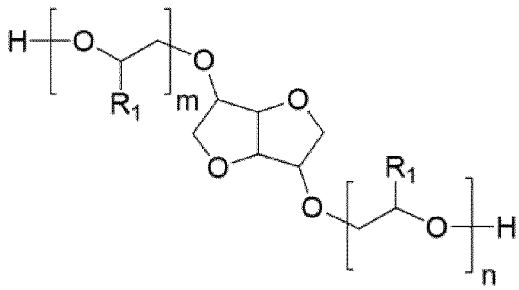

In the above formula A,

each of $R_1$ independently represents hydrogen or an alkyl group, and more concretely, hydrogen or an alkyl group having 1 to 18 carbons, and

each of m and n independently represents an integer of 0 to 15, provided that m+n represents an integer of 1 to 25, more concretely, an integer of 2 to 20, and even more concretely, an integer of 3 to 15.

In other embodiment, the anhydrosugar alcohol-alkylene glycol may be a compound represented by the following formula B.

[Formula B]

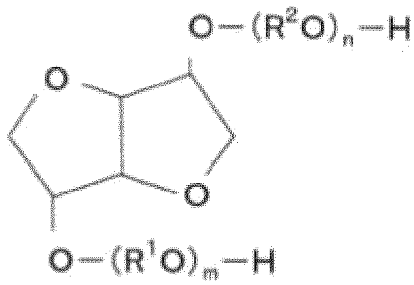

In the above formula B,

each of $R^1$ and $R^2$ independently represents a linear alkylene group having 2 to 18 carbons or a branched alkylene group having 3 to 18 carbons, and

each of m and n independently represents an integer of 0 to 15, provided that m+n represents an integer of 1 to 30, or an integer of 1 to 25.

More concretely, in the above formula B,

each of $R^1$ and $R^2$ independently represents ethylene group, propylene group or isopropylene group, and even more concretely $R^1$ and $R^2$ are the same, and
each of m and n independently represents an integer of 0 to 14, provided that m+n is an integer of 1 to 25, an integer of 2 to 20, or an integer of 3 to 15.

In an embodiment, as the anhydrosugar alcohol-alkylene glycol, the following isosorbide-propylene glycol, isosorbide-ethylene glycol or a mixture thereof may be used.

[Isosorbide-propylene glycol]

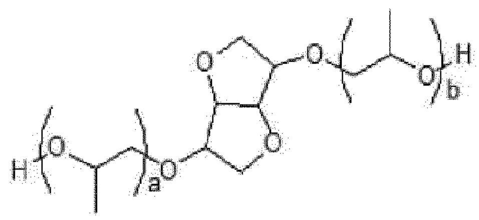

In the above formula, each of a and b independently represents an integer of 0 to 15, provided that a+b represents an integer of 1 to 30 or an integer of 1 to 25, and more concretely, each of a and b may independently represent an integer of 0 to 14, provided that a+b may represent an integer of 1 to 25, an integer of 2 to 20 or an integer of 3 to 15.

[Isosorbide-ethylene glycol]

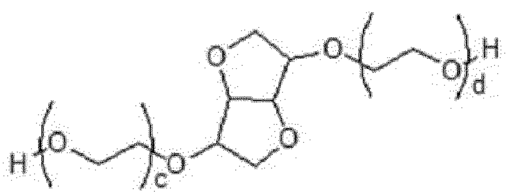

In the above formula, each of c and d independently represents an integer of 0 to 15, provided that c+d represents an integer of 1 to 30 or an integer of 1 to 25, and more concretely, each of c and d may independently represent an integer of 0 to 14, provided that c+d may represent an integer of 1 to 25, an integer of 2 to 20 or an integer of 3 to 15.

The amount of the anhydrosugar alcohol-alkylene glycol in the diol component comprised as repeating units in the polycarbonate copolymer of the present invention is 0.3 to 56.9 mol%, based on total 100 mol% of the diol component. If the amount of the anhydrosugar alcohol-alkylene glycol in the diol component, based on total 100 mol% of the diol component, is less than 0.3 mol%, the tensile strength and biodegradability of the copolymer become poor, and to the contrary, if it is greater than 56.9 mol%, the tensile strength and heat resistance of the copolymer become poor.

In an embodiment, the amount of the anhydrosugar alcohol-alkylene glycol in the diol component, based on total 100 mol% of the diol component, may be 0.3 mol% or more, 0.4 mol% or more, or 0.5 mol% or more, and also it may be 56.9 mol% or less, 56 mol% or less, 55 mol% or less, 54 mol% or less, 53 mol% or less, 52 mol% or less, 51 mol% or less, 50 mol% or less, 49 mol% or less, 48 mol% or less, 47 mol% or less, 46 mol% or less, 45 mol% or less, 44 mol% or less, 43 mol% or less, 42 mol% or less, 41 mol% or less, or 40 mol% or less.

**(c) Aromatic diol**

In the present invention, the aromatic diol means an aromatic compound having two hydroxy groups.
In an embodiment, the aromatic diol may be one or more selected from the group consisting of bisphenol-based diol compound, fluorine-based diol compound, benzene-based diol compound, furan-based diol compound, pyridine-based diol compound, or combination thereof.
In an embodiment, the aromatic diol may be one or more selected from the group consisting of 2,2-bis(4-hydroxyphenyl)propane [hereinafter referred to as bisphenol A], alkylene oxide adduct of bisphenol A (e.g., an adduct by adding 1 to 25 moles of C2-C18 alkylene oxide per mole of bisphenol A), 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxy-diphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl)sulfone, 2,4'-dihydroxy diphenylsulfone, bis(4-hydroxyphenyl)sulfide, 4,4'-dihydroxydiphenylether, 4,4'-dihydroxy-3,3'-dichlorodiphenylether, 4,4'-dihydroxy-2,5-diethoxydiphenylether, 9,9-bis(4-(2-hydroxyethoxy-2-methyl)phenyl)fluorene, 9,9-bis(4-hydroxyphenyl)fluorene, 9,9-bis(4-hydroxy-2-methylphenyl)fluorene, 9,9-bis(4-(2-hydroxyethoxy)phenyl)fluorene, 1,4-bis(2-hydroxymethyl)benzene, 1,3-bis(2-hydroxymethyl)benzene, 1,4-bis(2-hydroxyethyl)benzene, 2,5-bis(hydroxymethyl)furan, 2,5-bis(hydroxyethyl)furan, 2,6-bis(hydroxymethyl)pyridine, or combination thereof, but it is not limited thereto.
More concretely, the aromatic diol may be one or more selected from the group consisting of bisphenol A, alkylene oxide adduct of bisphenol A, 9,9-bis-(4-(2-hydroxyethoxy)phenyl)fluorene, 1,4-bis(2-hydroxymethyl)benzene, 1,3-bis(2-hydroxymethyl)benzene, 1,4-bis(2-hydroxyethyl)benzene, 2,5-bis(hydroxymethyl)furan, 2,5-bis(hydroxyethyl)furan, 2,6-bis(hydroxymethyl)pyridine, or combination thereof, but it is not limited thereto.
The amount of the aromatic diol in the diol component comprised as repeating units in the polycarbonate copolymer of the present invention is 32.1 to 99.4 mol%, based on total 100 mol% of the diol component. If the amount of the aromatic diol in the diol component, based on total 100 mol% of the diol component, is less than 32.1 mol%, the tensile strength and elongation of the copolymer become poor, and to the contrary, if it is greater than 99.4 mol%, the tensile strength and biodegradability of the copolymer become poor.
In an embodiment, the amount of the aromatic diol in the diol component, based on total 100 mol% of the diol component, may be 32.1 mol% or more, 32.5 mol% or more, 33 mol% or more, 33.5 mol% or more, 34 mol% or more, 34.5 mol% or more, or 35 mol% or more, and also it may be 99.4 mol% or less, 99.3 mol% or less, 99.2 mol% or less, 99.1 mol% or less, or 99 mol% or less.

**(d) Optional additional diol**

In an embodiment, the diol component may further comprise (d) additional diol selected from aliphatic diol, alicyclic diol other than anhydrosugar alcohol and anhydrosugar alcohol-alkylene glycol, or mixture thereof.
In an embodiment, the aliphatic diol may be selected from ethyleneglycol, propanediol (e.g., 1,2-propanediol and 1,3-propanediol, etc.), butanediol (e.g., 1,2-butanediol, 1,3-butanediol, and 1,4-butanediol, etc.), pentanediol (e.g., 1,2-pentanediol, 1,3-pentanediol, 1,4-pentanediol, and 1,5-pentanediol, etc.), hexanediol (e.g., 1,2-hexanthanediol, 1,3-hexanediol, 1,4-hexanediol, 1,5-hexanediol and 1,6-hexanediol, etc.), diethyleneglycol, triethyleneglycol, tetraethyleneglycol, or mixture thereof, but it is not limited thereto.
In an embodiment, the alicyclic diol other than anhydrosugar alcohol and anhydrosugar alcohol-alkylene glycol may be selected from cyclohexane dimethanol (e.g., 1,2-cyclohexane dimethanol, 1,3-cyclohexane dimethanol, 1,4-cyclohexane dimethanol, etc.), 2-methyl-1,4-cyclohexanediol, decalin dimethanol (e.g., 2,6-decalin dimethanol, 1,5-decalin dimethanol, and 2,3-decalin dimethanol, etc.), norbornane dimethanol (e.g., 2,3-norbornane dimethanol and 2,5-norbornane dimethanol, etc.), adamantanediol (e.g., 1,2-adamantanediol, 1,3-adamantanediol, and 1,4-adamantanediol, etc.), or mixture thereof, but it is not limited thereto.
The (d) additional diol compound used in the present invention is not limited to the above examples, and the additional diol compound may be used alone or as a mixture of two or more thereof.
In an embodiment, the amount of the (d) additional diol in the diol component, based on total 100 mol% of the diol component, may be 1 mol% or more, 2 mol% or more, 3 mol% or more, 4 mol% or more, 5 mol% or more, 6 mol% or more, 7 mol% or more, 8 mol% or more, 9 mol% or more, or 10 mol% or more, and also it may be 30 mol% or less, 29 mol% or less, 28 mol% or less, 27 mol% or less, 26 mol% or less, 25 mol% or less, 24 mol% or less, 23 mol% or less, 22 mol% or less, 21 mol% or less, or 20 mol% or less, but it is not limited thereto.

**[Carbonic acid diester component]**

In the present invention, the kind of the carbonic acid diester component is not especially limited as long as

the effect of the present invention is not lost, and for example, it may be selected from dialkyl carbonate, diaryl carbonate, alkylene carbonate, or combination thereof.

In an embodiment, examples of the dialkyl carbonate may include dimethyl carbonate, diethyl carbonate, dibutyl carbonate, dicyclohexyl carbonate, diisobutyl carbonate, ethyl n-butyl carbonate and ethyl isobutyl carbonate, etc.; examples of the diaryl carbonate may include diphenyl carbonate, ditolyl carbonate, bis(chlorophenyl) carbonate and di(m-cresyl) carbonate, etc.; and examples of the alkylene carbonate may include ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, 2,4-pentylene carbonate and neopentylene carbonate, etc.

In an embodiment, the carbonic acid diester component may be selected from dimethyl carbonate, diethyl carbonate, diphenyl carbonate, ethylene carbonate, or combination thereof, and more preferably it may be diphenyl carbonate.

In an embodiment, the carbonic acid diester component may be selected from the compounds represented by the following formula C:

[Formula C]

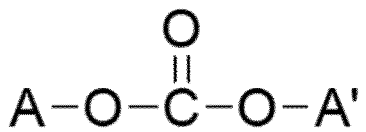

In the above formula C, each of A and A' is independently selected from unsubstituted or halogen-substituted, alkyl group having 1 to 20 carbon atoms, aryl group having 6 to 20 carbon atoms or aralkyl group having 7 to 25 carbon atoms, and A and A' may be the same or different from each other.

In an embodiment, the carbonic acid diester component represented by the above formula C may be selected for use from diphenyl carbonate, ditolyl carbonate, bischlorophenyl carbonate, dimethyl carbonate, diethyl carbonate, di-t-butyl carbonate or mixture thereof, and preferably diphenyl carbonate or dimethyl carbonate may be used.

In preparing the polycarbonate copolymer of the present invention, the carbonic acid diester component may be used in a molar equivalent of 0.90 to 1.10, and preferably 0.96 to 1.04, based on 1 molar equivalent of total diol component. If the molar equivalent of the carbonic acid diester component based on 1 molar equivalent of total diol component is less than 0.90, the OH groups at the ends of the prepared polycarbonate copolymer increase and thus the thermal stability of the polycarbonate copolymer deteriorates or the desired high molecular weight cannot be obtained. To the contrary, if the molar equivalent of the carbonic acid diester component is greater than 1.10, the rate of transesterification reaction is reduced under the same conditions or the desired high molecular weight cannot be obtained, and also the amount of residual carbonate diester in the prepared polycarbonate copolymer increases, and such a residual carbonate diester generates a bad odor during the molding process using the polycarbonate copolymer, or causes bad odor in the molded article-which is not desirable.

In an embodiment, the polycarbonate copolymer of the present invention may comprise repeating unit having a structure of the following formula 1; repeating unit having a structure of the following formula 2; and repeating unit having a structure of the following formula 3.

[Formula 1]

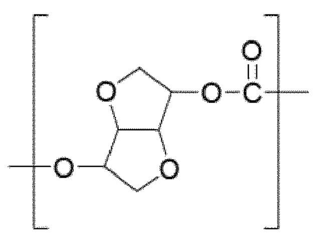

[Formula 2]

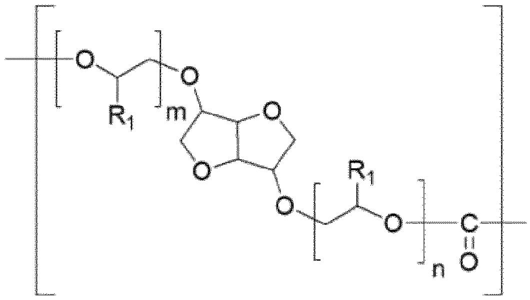

in the above formula 2,

each of $R_1$ independently represents hydrogen or an alkyl group, and more concretely, hydrogen or an alkyl group having 1 to 18 carbons, and

each of m and n independently represents an integer of 0 to 15, provided that m+n represents an integer of 1 to 25, more concretely, an integer of 2 to 20, and even more concretely, an integer of 3 to 15;

[Formula 3]

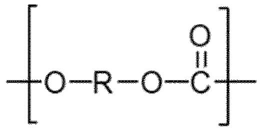

in the above formula 3,
R is an arylene group with 6 to 40 carbon atoms; or a heteroarylene group with 5 to 40 carbon atoms comprising one or more heteroatoms selected from the group consisting of N, O and S.

Also, in an embodiment, the polycarbonate copolymer of the present invention may further comprise repeating unit having a structure of the following formula 4.

[Formula 4]

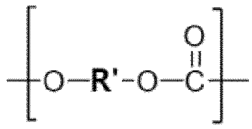

in the above formula 4,
R' is an alkylene group with 2 to 12 carbon atoms, a cycloalkylene group with 3 to 30 carbon atoms, or a combination thereof.

The present invention also provides a method for preparing a polycarbonate copolymer, comprising: reacting a mixture comprising a diol component and a carbonic acid diester component in the presence of polymerization catalyst, wherein the diol component comprises, based on total 100 mol% of the diol component, (a) 0.3 to 66.9 mol% of anhydrosugar alcohol, (b) 0.3 to 56.9 mol% of anhydrosugar alcohol-alkylene glycol and (c) 32.1 to 99.4 mol% of aromatic diol.

In an embodiment, the diol component used in the method for preparing a polycarbonate copolymer may further comprise (d) additional diol selected from aliphatic diol, alicyclic diol other than anhydrosugar alcohol and anhydrosugar alcohol-alkylene glycol, or mixture thereof.

The kinds and amounts of the anhydrosugar alcohol, anhydrosugar alcohol-alkylene glycol, aromatic diol, additional diol and carbonic acid diester component that can be used in the method for preparing a polycarbonate copolymer of the present invention are the same as explained above.

In the method for preparing a polycarbonate copolymer of the present invention, as the polymerization catalyst,

a transesterification catalyst may be used, and for example, alkali metal salt compound, alkaline earth metal salt compound, or mixture thereof may be used.

In an embodiment, together with a polymerization catalyst selected from alkali metal salt compound, alkaline earth metal salt compound, or mixture thereof, auxiliary use of a basic compound selected from basic boron compound, basic phosphorus compound, basic ammonium compound, amine-based compound or mixture thereof is also possible, but it is preferable to use the polymerization catalyst alone, without auxiliary use of basic compound.

In an embodiment, the alkali metal salt compound used as the polymerization catalyst may be, for example, sodium hydroxide, potassium hydroxide, lithium hydroxide, cesium hydroxide, sodium bicarbonate, potassium bicarbonate, lithium bicarbonate, cesium bicarbonate, sodium carbonate, potassium carbonate, lithium carbonate, cesium carbonate, sodium acetate, potassium acetate, lithium acetate, cesium acetate , sodium stearate, potassium stearate, lithium stearate, cesium stearate, sodium borohydride, potassium borohydride, lithium borohydride, cesium borohydride, sodium borophenylate, potassium borophenylate, lithium borophenylate, cesium borophenylate, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium hydrogen phosphite, dipotassium hydrogen phosphite, dilithium hydrogen phosphite, dicesium hydrogen phosphite, disodium phenyl phosphate, dipotassium phenyl phosphate, dilithium phenyl phosphate, dicesium phenyl phosphate, alcoholate or phenolate of sodium, potassium, lithium or cesium, disodium salt, dipotassium salt, dilithium salt or or dicesium salt of bisphenol A, etc.

In an embodiment, the alkaline earth metal salt compound used as the polymerization catalyst may be, for example, calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, calcium stearate, barium stearate, magnesium stearate or strontium stearate, etc.

The aforesaid alkali metal salt compound and alkaline earth metal salt compound may be used alone, or in combination of two or more thereof.

In an embodiment, the basic boron compound used in combination with the aforesaid polymerization catalyst may be, for example, sodium salt, potassium salt, lithium salt, calcium salt, barium salt, magnesium salt or strontium salt, etc. of tetramethyl boron, tetraethyl boron, tetrapropyl boron, tetrabutyl boron, trimethylethyl boron, trimethylbenzyl boron, trimethylphenyl boron, triethylmethyl boron, triethylbenzyl boron, triethylphenyl boron, tributylbenzyl boron, tributylphenyl boron, tetraphenyl boron, benzyltriphenyl boron, methyltriphenyl boron, and butyltriphenyl boron, etc.

In an embodiment, the basic phosphorus compound may be, for example, triethylphosphine, tri-n-propylphosphine, triisopropylphosphine, tri-n-butylphosphine, triphenylphosphine, tributylphosphine, or quaternary phosphonium salt, etc.

In an embodiment, the basic ammonium compound may be, for example, tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide or butyltriphenylammonium hydroxide, etc.

In an embodiment, the amine-based compound may be, for example, 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylamino imidazole, 2-methoxyimidazole, imidazole, 2-mercaptoimidazole, 2-methylimidazole or aminoquinoline, etc.

The aforesaid basic compound used in combination with the polymerization catalyst may be used alone, or in combination of two or more thereof.

By using the polycarbonate copolymer of the present invention, it is possible to obtain a molded article having good environmental friendliness and biodegradability, and at the same time, showing remarkably improved mechanical properties (particularly, tensile strength and elongation), as compared with the existing polycarbonate copolymer containing anhydrosugar alcohol.

Therefore, according to to another aspect of the present invention, a molded article comprising the polycarbonate copolymer of the present invention is provided.

The molded article can be manufactured by processing the polycarbonate copolymer of the present invention in a known molding method of extrusion, injection or other.

The present invention is explained in more detail through the following Examples and Comparative Examples. However, the scope of the present invention is not limited thereby in any manner.

**[EXAMPLES]**

## Example 1

Into a 1,000 mL 4-necked reactor connected to nitrogen gas line and vacuum pump for pressure reduction equipped with trap for byproduct removal and having an agitator capable of confirming the agitation torque, a thermometer and a heater, 95.8 mmol of isosorbide, 95.8 mmol of ethylene oxide 1 mole adduct of isosorbide, 1,724.4 mmol of ethylene oxide 2 mole adduct of bisphenol A, 1,916.0 mmol of diphenyl carbonate, and calcium chloride (100 ppm based on the total amount of all diols) were fed, and then the temperature was raised to 100°C under a nitrogen atmosphere, and the reaction raw materials were dissolved while stirring as necessary. After dissolving the reaction raw materials, the temperature of the reactor was raised to 160°C and the reaction was conducted for 1 hour, and then the pressure was reduced from normal pressure to 20 torr to remove some of the by-product phenol.

Then, the reactor temperature was raised to 240°C and the pressure was reduced to 3 torr or less, and the reaction was further conducted for 1 hour. After the agitation torque of the agitator reached a predetermined agitation torque, the reaction was terminated. As a result of the reaction, about 410 g of transparent polycarbonate copolymer with a number average molecular weight of 24,200 g/mol, a PDI of 2.9, and a glass transition temperature of 123°C was obtained.

Using the polycarbonate resin obtained above, five (5) identical tensile samples were prepared according to ASTM D638, and the tensile strength and elongation of the 5 tensile samples were measured using a universal testing machine (UTM). It was confirmed that the average tensile strength of the 5 measurements of tensile strength was 78.7 MPa, the average elongation rate of the 5 measurements of elongation was 84.1 %, and the average weight loss rates of 3 measurements of biodegradability after 3 months and after 6 months were 4.8 % and 6.8 %, respectively. The results are shown in Table 1 below.

## Example 2

Excepting that 95.8 mmol of ethylene oxide 5 mole adduct of isosorbide was used instead of 95.8 mmol of ethylene oxide 1 mole adduct of isosorbide, the same method as in Example 1 was conducted to obtain 489 g of polycarbonate copolymer with a number average molecular weight of 25,500 g/mol, a PDI of 3.1, and a glass transition temperature of 110°C. After measuring the tensile strength, elongation and biodegradability of the obtained polycarbonate copolymer according to the same methods as in Example 1, it was confirmed that the average tensile strength was 85.7 MPa, the average elongation rate was 92.2 %, and the average weight loss after 3 months and after 6 months were 8.3 % and 15.2 %, respectively. The results are shown in Table 1 below.

## Example 3

Excepting that 95.8 mmol of propylene oxide 5 mole adduct of isosorbide was used instead of 95.8 mmol of ethylene oxide 1 mole adduct of isosorbide, the same method as in Example 1 was conducted to obtain 500 g of polycarbonate copolymer with a number average molecular weight of 22,100 g/mol, a PDI of 3.2, and a glass transition temperature of 115°C. After measuring the tensile strength, elongation and biodegradability of the obtained polycarbonate copolymer according to the same methods as in Example 1, it was confirmed that the average tensile strength was 91.1 MPa, the average elongation rate was 88.5 %, and the average weight loss after 3 months and after 6 months were 7.2 % and 13.9 %, respectively. The results are shown in Table 1 below.

## Example 4

Excepting that the amount of isosorbide was changed from 95.8 mmol to 89.0 mmol, the amount of diphenyl carbonate was changed from 1,916.0 mmol to 1,779.1 mmol, the amount of ethylene oxide 2 mole adduct of bisphenol A was changed from 1,724.4 mmol to 1,601.2 mmol, and 89.0 mmol of propylene oxide 25 mole adduct of isosorbide was used instead of 95.8 mmol of ethylene oxide 1 mole adduct of isosorbide, the same method as in Example 1 was conducted to obtain 595 g of polycarbonate copolymer with a number average molecular weight of 23,800 g/mol, a PDI of 4.5, and a glass transition temperature of 92°C. After measuring the tensile strength, elongation and biodegradability of the obtained polycarbonate copolymer according to the same methods as in Example 1, it was confirmed that the average tensile strength was 73.6 MPa, the average elongation rate was 110.9 %, and the average weight loss after 3 months and after 6 months were 13.8 % and 28.0 %, respectively. The results are shown in Table 1 below.

**Example 5**

Excepting that the amount of isosorbide was changed from 95.8 mmol to 219.0 mmol, the amount of diphenyl carbonate was changed from 1,916.0 mmol to 2,189.7 mmol, 1,532.8 mmol of bisphenol A was used instead of 1,724.4 mmol of ethylene oxide 2 mole adduct of bisphenol A, and 437.9 mmol of ethylene oxide 5 mole adduct of isosorbide was used instead of 95.8 mmol of ethylene oxide 1 mole adduct of isosorbide, the same method as in Example 1 was conducted to obtain 531 g of polycarbonate copolymer with a number average molecular weight of 23,800 g/mol, a PDI of 3.2, and a glass transition temperature of 104°C. After measuring the tensile strength, elongation and biodegradability of the obtained polycarbonate copolymer according to the same methods as in Example 1, it was confirmed that the average tensile strength was 85.3 MPa, the average elongation rate was 77.9 %, and the average weight loss after 3 months and after 6 months were 16.1 % and 30.5 %, respectively. The results are shown in Table 1 below.

**Example 6**

Excepting that the amount of isosorbide was changed from 95.8 mmol to 157.4 mmol, the amount of diphenyl carbonate was changed from 1,916.0 mmol to 1,573.8 mmol, 1,101.7 mmol of bisphenol A was used instead of 1,724.4 mmol of ethylene oxide 2 mole adduct of bisphenol A, and 314.8 mmol of ethylene oxide 25 mole adduct of isosorbide was used instead of 95.8 mmol of ethylene oxide 1 mole adduct of isosorbide, the same method as in Example 1 was conducted to obtain 677 g of polycarbonate copolymer with a number average molecular weight of 27,300 g/mol, a PDI of 4.2, and a glass transition temperature of 83°C. After measuring the tensile strength, elongation and biodegradability of the obtained polycarbonate copolymer according to the same methods as in Example 1, it was confirmed that the average tensile strength was 73.5 MPa, the average elongation rate was 96.0 %, and the average weight loss after 3 months and after 6 months were 19.3 % and 33.4 %, respectively. The results are shown in Table 1 below.

**Example 7**

Excepting that the amount of isosorbide was changed from 95.8 mmol to 479.0 mmol, the amount of diphenyl carbonate was changed from 1,916.0 mmol to 2,395.0 mmol, 1,676.5 mmol of bisphenol A was used instead of 1,724.4 mmol of ethylene oxide 2 mole adduct of bisphenol A, and 239.5 mmol of propylene oxide 1 mole adduct of isosorbide was used instead of 95.8 mmol of ethylene oxide 1 mole adduct of isosorbide, the same method as in Example 1 was conducted to obtain 485 g of polycarbonate copolymer with a number average molecular weight of 21,600 g/mol, a PDI of 3.4, and a glass transition temperature of 151°C. After measuring the tensile strength, elongation and biodegradability of the obtained polycarbonate copolymer according to the same methods as in Example 1, it was confirmed that the average tensile strength was 75.4 MPa, the average elongation rate was 42.4 %, and the average weight loss after 3 months and after 6 months were 5.6 % and 7.3 %, respectively. The results are shown in Table 1 below.

**Example 8**

Excepting that the amount of isosorbide was changed from 95.8 mmol to 479.0 mmol, the amount of diphenyl carbonate was changed from 1,916.0 mmol to 2,395.0 mmol, 1,676.5 mmol of bisphenol A was used instead of 1,724.4 mmol of ethylene oxide 2 mole adduct of bisphenol A, and 239.5 mmol of propylene oxide 5 mole adduct of isosorbide was used instead of 95.8 mmol of ethylene oxide 1 mole adduct of isosorbide, the same method as in Example 1 was conducted to obtain 546 g of polycarbonate copolymer with a number average molecular weight of 23,200 g/mol, a PDI of 3.4, and a glass transition temperature of 118°C. After measuring the tensile strength, elongation and biodegradability of the obtained polycarbonate copolymer according to the same methods as in Example 1, it was confirmed that the average tensile strength was 83.7 MPa, the average elongation rate was 56.3 %, and the average weight loss after 3 months and after 6 months were 8.9 % and 16.8 %, respectively. The results are shown in Table 1 below.

**Example 9**

Excepting that the amount of isosorbide was changed from 95.8 mmol to 786.9 mmol, the amount of diphenyl carbonate was changed from 1,916.0 mmol to 1,967.3 mmol, 688.6 mmol of 9,9-bis-(4-(2-hydroxyethoxy)phenyl)fluorene was used instead of 1,724.4 mmol of ethylene oxide 2 mole adduct of bisphenol A, and 491.8 mmol of ethylene oxide 5 mole adduct of isosorbide was used instead of 95.8 mmol of ethylene oxide 1 mole adduct of isosorbide, the same method as in Example 1 was conducted to obtain 471 g of polycarbonate copolymer with a number average molecular weight of 24,200 g/mol, a PDI of 3.1, and a glass transition temperature of 105°C. After measuring the tensile strength, elongation and biodegradability of the obtained polycarbonate copolymer according to the same methods as in Example 1, it was confirmed that the average tensile strength was 96.4 MPa, the average elongation rate was 49.9 %, and the

average weight loss after 3 months and after 6 months were 17.6 % and 32.2 %, respectively. The results are shown in Table 1 below.

**Example 10**

Excepting that the amount of isosorbide was changed from 95.8 mmol to 786.9 mmol, the amount of diphenyl carbonate was changed from 1,916.0 mmol to 1,967.3 mmol, 688.6 mmol of 9,9-bis-(4-(2-hydroxyethoxy)phenyl)fluorene was used instead of 1,724.4 mmol of ethylene oxide 2 mole adduct of bisphenol A, and 491.8 mmol of propylene oxide 5 mole adduct of isosorbide was used instead of 95.8 mmol of ethylene oxide 1 mole adduct of isosorbide, the same method as in Example 1 was conducted to obtain 463 g of polycarbonate copolymer with a number average molecular weight of 21,600 g/mol, a PDI of 3.4, and a glass transition temperature of 108°C. After measuring the tensile strength, elongation and biodegradability of the obtained polycarbonate copolymer according to the same methods as in Example 1, it was confirmed that the average tensile strength was 98.1 MPa, the average elongation rate was 45.6 %, and the average weight loss after 3 months and after 6 months were 13.3 % and 24.5 %, respectively. The results are shown in Table 1 below.

**Example 11**

Excepting that the amount of isosorbide was changed from 95.8 mmol to 479.0 mmol, 670.6 mmol of 9,9-bis-(4-(2-hydroxyethoxy)phenyl)fluorene was used instead of 1,724.4 mmol of ethylene oxide 2 mole adduct of bisphenol A, and 766.4 mmol of ethylene oxide 5 mole adduct of isosorbide was used instead of 95.8 mmol of ethylene oxide 1 mole adduct of isosorbide, the same method as in Example 1 was conducted to obtain 466 g of polycarbonate copolymer with a number average molecular weight of 26,100 g/mol, a PDI of 3.5, and a glass transition temperature of 81°C. After measuring the tensile strength, elongation and biodegradability of the obtained polycarbonate copolymer according to the same methods as in Example 1, it was confirmed that the average tensile strength was 77.0 MPa, the average elongation rate was 77.2 %, and the average weight loss after 3 months and after 6 months were 27.9 % and 43.6 %, respectively. The results are shown in Table 1 below.

**Example 12**

Excepting that the amount of isosorbide was changed from 95.8 mmol to 479.0 mmol, 670.6 mmol of 9,9-bis-(4-(2-hydroxyethoxy)phenyl)fluorene was used instead of 1,724.4 mmol of ethylene oxide 2 mole adduct of bisphenol A, and 766.4 mmol of propylene oxide 5 mole adduct of isosorbide was used instead of 95.8 mmol of ethylene oxide 1 mole adduct of isosorbide, the same method as in Example 1 was conducted to obtain 472 g of polycarbonate copolymer with a number average molecular weight of 25,500 g/mol, a PDI of 3.6, and a glass transition temperature of 80°C. After measuring the tensile strength, elongation and biodegradability of the obtained polycarbonate copolymer according to the same methods as in Example 1, it was confirmed that the average tensile strength was 74.6 MPa, the average elongation rate was 78.1 %, and the average weight loss after 3 months and after 6 months were 23.7 % and 40.3 %, respectively. The results are shown in Table 1 below.

**Example 13**

Excepting that the amount of isosorbide was changed from 95.8 mmol to 1,026.4 mmol, the amount of diphenyl carbonate was changed from 1,916.0 mmol to 1,866.2 mmol, the amount of ethylene oxide 2 mole adduct of bisphenol A was changed from 1,724.4 mmol to 653.2 mmol, and 186.6 mmol of ethylene oxide 5 mole adduct of isosorbide was used instead of 95.8 mmol of ethylene oxide 1 mole adduct of isosorbide, the same method as in Example 1 was conducted to obtain 503 g of polycarbonate copolymer with a number average molecular weight of 25,300 g/mol, a PDI of 3.2, and a glass transition temperature of 86°C. After measuring the tensile strength, elongation and biodegradability of the obtained polycarbonate copolymer according to the same methods as in Example 1, it was confirmed that the average tensile strength was 81.0 MPa, the average elongation rate was 48.7 %, and the average weight loss after 3 months and after 6 months were 14.9 % and 26.1 %, respectively. The results are shown in Table 1 below.

**Example 14**

Excepting that the amount of isosorbide was changed from 95.8 mmol to 1,026.4 mmol, the amount of diphenyl carbonate was changed from 1,916.0 mmol to 1,866.2 mmol, the amount of ethylene oxide 2 mole adduct of bisphenol A was changed from 1,724.4 mmol to 653.2 mmol, and 186.6 mmol of propylene oxide 5 mole adduct of isosorbide was used instead of 95.8 mmol of ethylene oxide 1 mole adduct of isosorbide, the same method as in Example 1 was

conducted to obtain 474 g of polycarbonate copolymer with a number average molecular weight of 24,700 g/mol, a PDI of 3.4, and a glass transition temperature of 83°C. After measuring the tensile strength, elongation and biodegradability of the obtained polycarbonate copolymer according to the same methods as in Example 1, it was confirmed that the average tensile strength was 83.4 MPa, the average elongation rate was 39.5 %, and the average weight loss after 3 months and after 6 months were 13.2 % and 21.8 %, respectively. The results are shown in Table 1 below.

## Example 15

Excepting that the amount of isosorbide was changed from 95.8 mmol to 1,060.6 mmol, the amount of diphenyl carbonate was changed from 1,916.0 mmol to 1,928.4 mmol, 674.9 mmol of bisphenol A was used instead of 1,724.4 mmol of ethylene oxide 2 mole adduct of bisphenol A, and 192.8 mmol of ethylene oxide 5 mole adduct of isosorbide was used instead of 95.8 mmol of ethylene oxide 1 mole adduct of isosorbide, the same method as in Example 1 was conducted to obtain 463 g of polycarbonate copolymer with a number average molecular weight of 24,600 g/mol, a PDI of 3.0, and a glass transition temperature of 101°C. After measuring the tensile strength, elongation and biodegradability of the obtained polycarbonate copolymer according to the same methods as in Example 1, it was confirmed that the average tensile strength was 84.9 MPa, the average elongation rate was 35.6 %, and the average weight loss after 3 months and after 6 months were 12.1 % and 24.5 %, respectively. The results are shown in Table 1 below.

## Example 16

Excepting that the amount of isosorbide was changed from 95.8 mmol to 1,060.6 mmol, the amount of diphenyl carbonate was changed from 1,916.0 mmol to 1,928.4 mmol, 674.9 mmol of bisphenol A was used instead of 1,724.4 mmol of ethylene oxide 2 mole adduct of bisphenol A, and 192.8 mmol of propylene oxide 5 mole adduct of isosorbide was used instead of 95.8 mmol of ethylene oxide 1 mole adduct of isosorbide, the same method as in Example 1 was conducted to obtain 491 g of polycarbonate copolymer with a number average molecular weight of 22,800 g/mol, a PDI of 3.2, and a glass transition temperature of 100°C. After measuring the tensile strength, elongation and biodegradability of the obtained polycarbonate copolymer according to the same methods as in Example 1, it was confirmed that the average tensile strength was 85.4 MPa, the average elongation rate was 34.1 %, and the average weight loss after 3 months and after 6 months were 10.2 % and 22.2 %, respectively. The results are shown in Table 1 below.

## Example 17

Excepting that the amount of isosorbide was changed from 95.8 mmol to 9.6 mmol, the amount of ethylene oxide 2 mole adduct of bisphenol A was changed from 1,724.4 mmol to 1,896.8 mmol, and 9.6 mmol of ethylene oxide 5 mole adduct of isosorbide was used instead of 95.8 mmol of ethylene oxide 1 mole adduct of isosorbide, the same method as in Example 1 was conducted to obtain 669 g of polycarbonate copolymer with a number average molecular weight of 27,900 g/mol, a PDI of 2.7, and a glass transition temperature of 120°C. After measuring the tensile strength, elongation and biodegradability of the obtained polycarbonate copolymer according to the same methods as in Example 1, it was confirmed that the average tensile strength was 73.2 MPa, the average elongation rate was 94.9 %, and the average weight loss after 3 months and after 6 months were 4.5 % and 9.9 %, respectively. The results are shown in Table 1 below.

## Example 18

Excepting that the amount of isosorbide was changed from 95.8 mmol to 11.6 mmol, the amount of diphenyl carbonate was changed from 1,916.0 mmol to 2,326.5 mmol, 2,303.3 mmol of bisphenol A was used instead of 1,724.4 mmol of ethylene oxide 2 mole adduct of bisphenol A, and 11.6 mmol of propylene oxide 5 mole adduct of isosorbide was used instead of 95.8 mmol of ethylene oxide 1 mole adduct of isosorbide, the same method as in Example 1 was conducted to obtain 585 g of polycarbonate copolymer with a number average molecular weight of 29,500 g/mol, a PDI of 2.2, and a glass transition temperature of 146°C. After measuring the tensile strength, elongation and biodegradability of the obtained polycarbonate copolymer according to the same methods as in Example 1, it was confirmed that the average tensile strength was 74.4 MPa, the average elongation rate was 88.3 %, and the average weight loss after 3 months and after 6 months were 2.9 % and 6.8 %, respectively. The results are shown in Table 1 below.

## Example 19

Excepting that the amount of isosorbide was changed from 95.8 mmol to 615.9 mmol, the amount of diphenyl carbonate was changed from 1,916.0 mmol to 2,052.8 mmol, the amount of ethylene oxide 2 mole adduct of bisphenol

A was changed from 1,724.4 mmol to 1,026.4 mmol, and 410.6 mmol of ethylene oxide 5 mole adduct of isosorbide was used instead of 95.8 mmol of ethylene oxide 1 mole adduct of isosorbide, the same method as in Example 1 was conducted to obtain 625 g of polycarbonate copolymer with a number average molecular weight of 25,000 g/mol, a PDI of 2.8, and a glass transition temperature of 93°C. After measuring the tensile strength, elongation and biodegradability of the obtained polycarbonate copolymer according to the same methods as in Example 1, it was confirmed that the average tensile strength was 86.7 MPa, the average elongation rate was 64.7 %, and the average weight loss after 3 months and after 6 months were 17.1 % and 30.8 %, respectively. The results are shown in Table 1 below.

**Example 20**

Excepting that the amount of isosorbide was changed from 95.8 mmol to 650.1 mmol, the amount of diphenyl carbonate was changed from 1,916.0 mmol to 2,166.9 mmol, 1,083.4 mmol of bisphenol A was used instead of 1,724.4 mmol of ethylene oxide 2 mole adduct of bisphenol A, and 433.4 mmol of propylene oxide 5 mole adduct of isosorbide was used instead of 95.8 mmol of ethylene oxide 1 mole adduct of isosorbide, the same method as in Example 1 was conducted to obtain 580 g of polycarbonate copolymer with a number average molecular weight of 23,800 g/mol, a PDI of 2.5, and a glass transition temperature of 111°C. After measuring the tensile strength, elongation and biodegradability of the obtained polycarbonate copolymer according to the same methods as in Example 1, it was confirmed that the average tensile strength was 88.8 MPa, the average elongation rate was 66.2 %, and the average weight loss after 3 months and after 6 months were 14.2 % and 28.3 %, respectively. The results are shown in Table 1 below.

**Example 21**

Excepting that the amount of isosorbide was changed from 95.8 mmol to 143.7 mmol, the amount of diphenyl carbonate was changed from 1,916.0 mmol to 2,874.0 mmol, 2,586.6 mmol of 1,4-bis(2-hydroxymethyl)benzene was used instead of 1,724.4 mmol of ethylene oxide 2 mole adduct of bisphenol A, and 143.7 mmol of ethylene oxide 5 mole adduct of isosorbide was used instead of 95.8 mmol of ethylene oxide 1 mole adduct of isosorbide, the same method as in Example 1 was conducted to obtain 500 g of polycarbonate copolymer with a number average molecular weight of 28,400 g/mol, a PDI of 2.3, and a glass transition temperature of 101°C. After measuring the tensile strength, elongation and biodegradability of the obtained polycarbonate copolymer according to the same methods as in Example 1, it was confirmed that the average tensile strength was 81.6 MPa, the average elongation rate was 94.8 %, and the average weight loss after 3 months and after 6 months were 6.9 % and 14.1 %, respectively. The results are shown in Table 1 below.

**Example 22**

Excepting that the amount of isosorbide was changed from 95.8 mmol to 260.0 mmol, the amount of diphenyl carbonate was changed from 1,916.0 mmol to 2,600.3 mmol, 1,820.2 mmol of 2,5-bis(hydroxymethyl)furan was used instead of 1,724.4 mmol of ethylene oxide 2 mole adduct of bisphenol A, and 520.1 mmol of propylene oxide 5 mole adduct of isosorbide was used instead of 95.8 mmol of ethylene oxide 1 mole adduct of isosorbide, the same method as in Example 1 was conducted to obtain 563 g of polycarbonate copolymer with a number average molecular weight of 21,500 g/mol, a PDI of 3.0, and a glass transition temperature of 109°C. After measuring the tensile strength, elongation and biodegradability of the obtained polycarbonate copolymer according to the same methods as in Example 1, it was confirmed that the average tensile strength was 80.2 MPa, the average elongation rate was 62.7 %, and the average weight loss after 3 months and after 6 months were 9.4 % and 18.9 %, respectively. The results are shown in Table 1 below.

**Example 23**

Excepting that the amount of isosorbide was changed from 95.8 mmol to 992.2 mmol, the amount of diphenyl carbonate was changed from 1,916.0 mmol to 2,480.5 mmol, 868.2 mmol of 2,6-bis(hydroxymethyl)pyridine was used instead of 1,724.4 mmol of ethylene oxide 2 mole adduct of bisphenol A, and 620.1 mmol of ethylene oxide 5 mole adduct of isosorbide was used instead of 95.8 mmol of ethylene oxide 1 mole adduct of isosorbide, the same method as in Example 1 was conducted to obtain 558 g of polycarbonate copolymer with a number average molecular weight of 26,600 g/mol, a PDI of 3.3, and a glass transition temperature of 99°C. After measuring the tensile strength, elongation and biodegradability of the obtained polycarbonate copolymer according to the same methods as in Example 1, it was confirmed that the average tensile strength was 90.5 MPa, the average elongation rate was 57.8 %, and the average weight loss after 3 months and after 6 months were 16.7 % and 35.3 %, respectively. The results are shown in Table 1 below.

## [COMPARATIVE EXAMPLES]

### Comparative Example 1

Excepting that the amount of isosorbide was changed from 95.8 mmol to 157.4 mmol, the amount of diphenyl carbonate was changed from 1,916.0 mmol to 1,573.8 mmol, the amount of ethylene oxide 2 mole adduct of bisphenol A was changed from 1,724.4 mmol to 1,416.5 mmol, and ethylene oxide 1 mole adduct of isosorbide was not used, the same method as in Example 1 was conducted to obtain 458 g of polycarbonate copolymer with a number average molecular weight of 28,800 g/mol, a PDI of 2.7, and a glass transition temperature of 118°C. After measuring the tensile strength, elongation and biodegradability of the obtained polycarbonate copolymer according to the same methods as in Example 1, it was confirmed that the average tensile strength was 68.1 MPa, the average elongation rate was 73.9 %, and the average weight loss after 3 months and after 6 months were 0 % and 0 %, respectively. The results are shown in Table 2 below.

### Comparative Example 2

Excepting that the amount of isosorbide was changed from 95.8 mmol to 184.8 mmol, the amount of diphenyl carbonate was changed from 1,916.0 mmol to 1,847.5 mmol, 1,662.8 mmol of bisphenol A was used instead of 1,724.4 mmol of ethylene oxide 2 mole adduct of bisphenol A, and ethylene oxide 1 mole adduct of isosorbide was not used, the same method as in Example 1 was conducted to obtain 444 g of polycarbonate copolymer with a number average molecular weight of 26,100 g/mol, a PDI of 2.2, and a glass transition temperature of 141°C. After measuring the tensile strength, elongation and biodegradability of the obtained polycarbonate copolymer according to the same methods as in Example 1, it was confirmed that the average tensile strength was 59.7 MPa, the average elongation rate was 70.4 %, and the average weight loss after 3 months and after 6 months were 0 % and 0 %, respectively. The results are shown in Table 2 below.

### Comparative Example 3

Excepting that the amount of isosorbide was changed from 95.8 mmol to 136.9 mmol, the amount of diphenyl carbonate was changed from 1,916.0 mmol to 1,368.55 mmol, 1,231.7 mmol of 9,9-bis-(4-(2-hydroxyethoxy)phenyl)fluorene was used instead of 1,724.4 mmol of ethylene oxide 2 mole adduct of bisphenol A, and ethylene oxide 1 mole adduct of isosorbide was not used, the same method as in Example 1 was conducted to obtain 450 g of polycarbonate copolymer with a number average molecular weight of 23,100 g/mol, a PDI of 2.5, and a glass transition temperature of 168°C. After measuring the tensile strength, elongation and biodegradability of the obtained polycarbonate copolymer according to the same methods as in Example 1, it was confirmed that the average tensile strength was 61.2 MPa, the average elongation rate was 10.2 %, and the average weight loss after 3 months and after 6 months were 0 % and 0 %, respectively. The results are shown in Table 2 below.

### Comparative Example 4

Excepting that the amount of isosorbide was changed from 95.8 mmol to 506.4 mmol, the amount of diphenyl carbonate was changed from 1,916.0 mmol to 1,687.9 mmol, the amount of ethylene oxide 2 mole adduct of bisphenol A was changed from 1,724.4 mmol to 1,181.5 mmol, and ethylene oxide 1 mole adduct of isosorbide was not used, the same method as in Example 1 was conducted to obtain 454 g of polycarbonate copolymer with a number average molecular weight of 27,500 g/mol, a PDI of 2.6, and a glass transition temperature of 120°C. After measuring the tensile strength, elongation and biodegradability of the obtained polycarbonate copolymer according to the same methods as in Example 1, it was confirmed that the average tensile strength was 70.0 MPa, the average elongation rate was 22.4 %, and the average weight loss after 3 months and after 6 months were 0 % and 0 %, respectively. The results are shown in Table 2 below.

### Comparative Example 5

Excepting that the amount of isosorbide was changed from 95.8 mmol to 581.6 mmol, the amount of diphenyl carbonate was changed from 1,916.0 mmol to 1,938.8 mmol, 1,357.2 mmol of bisphenol A was used instead of 1,724.4 mmol of ethylene oxide 2 mole adduct of bisphenol A, and ethylene oxide 1 mole adduct of isosorbide was not used, the same method as in Example 1 was conducted to obtain 423 g of polycarbonate copolymer with a number average molecular weight of 27,300 g/mol, a PDI of 2.3, and a glass transition temperature of 146°C. After measuring the tensile strength, elongation and biodegradability of the obtained polycarbonate copolymer according to the same methods as

in Example 1, it was confirmed that the average tensile strength was 62.1 MPa, the average elongation rate was 20.1 %, and the average weight loss after 3 months and after 6 months were 0 % and 0 %, respectively. The results are shown in Table 2 below.

**Comparative Example 6**

Excepting that the amount of isosorbide was changed from 95.8 mmol to 444.8 mmol, the amount of diphenyl carbonate was changed from 1,916.0 mmol to 1,482.6 mmol, 1,037.8 mmol of 9,9-bis-(4-(2-hydroxyethoxy)phenyl)fluorene was used instead of 1,724.4 mmol of ethylene oxide 2 mole adduct of bisphenol A, and ethylene oxide 1 mole adduct of isosorbide was not used, the same method as in Example 1 was conducted to obtain 436 g of polycarbonate copolymer with a number average molecular weight of 23,900 g/mol, a PDI of 2.5, and a glass transition temperature of 158°C. After measuring the tensile strength, elongation and biodegradability of the obtained polycarbonate copolymer according to the same methods as in Example 1, it was confirmed that the average tensile strength was 63.8 MPa, the average elongation rate was 2.5 %, and the average weight loss after 3 months and after 6 months were 0 % and 0 %, respectively. The results are shown in Table 2 below.

**Comparative Example 7**

Excepting that the amount of isosorbide was changed from 95.8 mmol to 8.2 mmol, the amount of diphenyl carbonate was changed from 1,916.0 mmol to 1,642.3 mmol, the amount of ethylene oxide 2 mole adduct of bisphenol A was changed from 1,724.4 mmol to 1,634.1 mmol, and ethylene oxide 1 mole adduct of isosorbide was not used, the same method as in Example 1 was conducted to obtain 441 g of polycarbonate copolymer with a number average molecular weight of 29,400 g/mol, a PDI of 2.6, and a glass transition temperature of 117°C. After measuring the tensile strength, elongation and biodegradability of the obtained polycarbonate copolymer according to the same methods as in Example 1, it was confirmed that the average tensile strength was 60.4 MPa, the average elongation rate was 74.1 %, and the average weight loss after 3 months and after 6 months were 0 % and 0 %, respectively. The results are shown in Table 2 below.

**Comparative Example 8**

Excepting that the amount of isosorbide was changed from 95.8 mmol to 8.9 mmol, the amount of diphenyl carbonate was changed from 1,916.0 mmol to 1,779.1 mmol, 1,770.2 mmol of bisphenol A was used instead of 1,724.4 mmol of ethylene oxide 2 mole adduct of bisphenol A, and ethylene oxide 1 mole adduct of isosorbide was not used, the same method as in Example 1 was conducted to obtain 450 g of polycarbonate copolymer with a number average molecular weight of 27,700 g/mol, a PDI of 2.3, and a glass transition temperature of 142°C. After measuring the tensile strength, elongation and biodegradability of the obtained polycarbonate copolymer according to the same methods as in Example 1, it was confirmed that the average tensile strength was 56.5 MPa, the average elongation rate was 71.5 %, and the average weight loss after 3 months and after 6 months were 0 % and 0 %, respectively. The results are shown in Table 2 below.

**Comparative Example 9**

Excepting that the amount of isosorbide was changed from 95.8 mmol to 3.8 mmol, the amount of diphenyl carbonate was changed from 1,916.0 mmol to 1,505.4 mmol, the amount of ethylene oxide 2 mole adduct of bisphenol A was changed from 1,724.4 mmol to 1,497.9 mmol, and 3.8 mmol of ethylene oxide 5 mole adduct of isosorbide was used instead of 95.8 mmol of ethylene oxide 1 mole adduct of isosorbide, the same method as in Example 1 was conducted to obtain 459 g of polycarbonate copolymer with a number average molecular weight of 26,200 g/mol, a PDI of 2.7, and a glass transition temperature of 115°C. After measuring the tensile strength, elongation and biodegradability of the obtained polycarbonate copolymer according to the same methods as in Example 1, it was confirmed that the average tensile strength was 61.7 MPa, the average elongation rate was 74.7 %, and the average weight loss after 3 months and after 6 months were 1.9 % and 4.1 %, respectively. The results are shown in Table 2 below.

**Comparative Example 10**

Excepting that the amount of isosorbide was changed from 95.8 mmol to 4.5 mmol, the amount of diphenyl carbonate was changed from 1,916.0 mmol to 1,779.1 mmol, 1,770.2 mmol of bisphenol A was used instead of 1,724.4 mmol of ethylene oxide 2 mole adduct of bisphenol A, and 4.5 mmol of propylene oxide 5 mole adduct of isosorbide was used instead of 95.8 mmol of ethylene oxide 1 mole adduct of isosorbide, the same method as in Example 1 was

conducted to obtain 460 g of polycarbonate copolymer with a number average molecular weight of 28,100 g/mol, a PDI of 2.3, and a glass transition temperature of 140°C. After measuring the tensile strength, elongation and biodegradability of the obtained polycarbonate copolymer according to the same methods as in Example 1, it was confirmed that the average tensile strength was 59.4 MPa, the average elongation rate was 72.6 %, and the average weight loss after 3 months and after 6 months were 1.3 % and 3.5 %, respectively. The results are shown in Table 2 below.

## Comparative Example 11

Excepting that the amount of isosorbide was changed from 95.8 mmol to 1,642.3 mmol, the amount of diphenyl carbonate was changed from 1,916.0 mmol to 2,451.1 mmol, the amount of ethylene oxide 2 mole adduct of bisphenol A was changed from 1,724.4 mmol to 784.4 mmol, and 24.5 mmol of ethylene oxide 5 mole adduct of isosorbide was used instead of 95.8 mmol of ethylene oxide 1 mole adduct of isosorbide, the same method as in Example 1 was conducted to obtain 545 g of polycarbonate copolymer with a number average molecular weight of 26,400 g/mol, a PDI of 2.5, and a glass transition temperature of 113°C. After measuring the tensile strength, elongation and biodegradability of the obtained polycarbonate copolymer according to the same methods as in Example 1, it was confirmed that the average tensile strength was 67.6 MPa, the average elongation rate was 10.4 %, and the average weight loss after 3 months and after 6 months were 2.5 % and 5.7 %, respectively. The results are shown in Table 2 below.

## Comparative Example 12

Excepting that the amount of isosorbide was changed from 95.8 mmol to 1,779.1 mmol, the amount of diphenyl carbonate was changed from 1,916.0 mmol to 2,655.4 mmol, 849.7 mmol of bisphenol A was used instead of 1,724.4 mmol of ethylene oxide 2 mole adduct of bisphenol A, and 26.6 mmol of propylene oxide 5 mole adduct of isosorbide was used instead of 95.8 mmol of ethylene oxide 1 mole adduct of isosorbide, the same method as in Example 1 was conducted to obtain 568 g of polycarbonate copolymer with a number average molecular weight of 28,700 g/mol, a PDI of 2.3, and a glass transition temperature of 132°C. After measuring the tensile strength, elongation and biodegradability of the obtained polycarbonate copolymer according to the same methods as in Example 1, it was confirmed that the average tensile strength was 64.9 MPa, the average elongation rate was 9.1 %, and the average weight loss after 3 months and after 6 months were 2.2 % and 4.0 %, respectively. The results are shown in Table 2 below.

## Comparative Example 13

Excepting that the amount of isosorbide was changed from 95.8 mmol to 150.5 mmol, the amount of diphenyl carbonate was changed from 1,916.0 mmol to 1,881.7 mmol, the amount of ethylene oxide 2 mole adduct of bisphenol A was changed from 1,724.4 mmol to 658.6 mmol, and 1,072.6 mmol of ethylene oxide 5 mole adduct of isosorbide was used instead of 95.8 mmol of ethylene oxide 1 mole adduct of isosorbide, the same method as in Example 1 was conducted to obtain 673 g of polycarbonate copolymer with a number average molecular weight of 27,100 g/mol, a PDI of 3.8, and a glass transition temperature of 48°C. After measuring the tensile strength, elongation and biodegradability of the obtained polycarbonate copolymer according to the same methods as in Example 1, it was confirmed that the average tensile strength was 46.8 MPa, the average elongation rate was 110.1 %, and the average weight loss after 3 months and after 6 months were 32.9 % and 56.7 %, respectively. The results are shown in Table 2 below.

## Comparative Example 14

Excepting that the amount of isosorbide was changed from 95.8 mmol to 150.5 mmol, the amount of diphenyl carbonate was changed from 1,916.0 mmol to 1,881.8 mmol, 658.6 mmol of bisphenol A was used instead of 1,724.4 mmol of ethylene oxide 2 mole adduct of bisphenol A, and 1,072.6 mmol of propylene oxide 5 mole adduct of isosorbide was used instead of 95.8 mmol of ethylene oxide 1 mole adduct of isosorbide, the same method as in Example 1 was conducted to obtain 517 g of polycarbonate copolymer with a number average molecular weight of 23,400 g/mol, a PDI of 3.8, and a glass transition temperature of 55°C. After measuring the tensile strength, elongation and biodegradability of the obtained polycarbonate copolymer according to the same methods as in Example 1, it was confirmed that the average tensile strength was 51.7 MPa, the average elongation rate was 103.8 %, and the average weight loss after 3 months and after 6 months were 30.2 % and 46.3 %, respectively. The results are shown in Table 2 below.

## Comparative Example 15

Excepting that the amount of isosorbide was changed from 95.8 mmol to 2,463.4 mmol, the amount of diphenyl carbonate was changed from 1,916.0 mmol to 2,737.1 mmol, 136.9 mmol of 1,4-cyclohexanedimethanol was used

instead of 1,724.4 mmol of ethylene oxide 2 mole adduct of bisphenol A, and 136.9 mmol of ethylene oxide 5 mole adduct of isosorbide was used instead of 95.8 mmol of ethylene oxide 1 mole adduct of isosorbide, the same method as in Example 1 was conducted to obtain 499 g of polycarbonate copolymer with a number average molecular weight of 29,700 g/mol, a PDI of 3.1, and a glass transition temperature of 125°C. After measuring the tensile strength, elongation and biodegradability of the obtained polycarbonate copolymer according to the same methods as in Example 1, it was confirmed that the average tensile strength was 88.1 MPa, the average elongation rate was 12.8 %, and the average weight loss after 3 months and after 6 months were 3.0 % and 4.9 %, respectively. The results are shown in Table 2 below.

**Comparative Example 16**

Excepting that the amount of isosorbide was changed from 95.8 mmol to 2,463.4 mmol, the amount of diphenyl carbonate was changed from 1,916.0 mmol to 2,737.1 mmol, 136.9 mmol of 1,4-butanediol was used instead of 1,724.4 mmol of ethylene oxide 2 mole adduct of bisphenol A, and 136.9 mmol of propylene oxide 5 mole adduct of isosorbide was used instead of 95.8 mmol of ethylene oxide 1 mole adduct of isosorbide, the same method as in Example 1 was conducted to obtain 497 g of polycarbonate copolymer with a number average molecular weight of 24,300 g/mol, a PDI of 2.3, and a glass transition temperature of 115°C. After measuring the tensile strength, elongation and biodegradability of the obtained polycarbonate copolymer according to the same methods as in Example 1, it was confirmed that the average tensile strength was 72.6 MPa, the average elongation rate was 16.5 %, and the average weight loss after 3 months and after 6 months were 14.4 % and 27.2 %, respectively. The results are shown in Table 2 below.

**[Component explanation]**

ISB: isosorbide
EI 1: ethylene oxide 1 mole adduct of isosorbide
EI 5: ethylene oxide 5 mole adduct of isosorbide
EI 25: ethylene oxide 25 mole adduct of isosorbide
PI 1: propylene oxide 1 mole adduct of isosorbide
PI 5: propylene oxide 5 mole adduct of isosorbide
PI 25: propylene oxide 25 mole adduct of isosorbide
BPA (EO)2: ethylene oxide 2 mole adduct of bisphenol A
BPA: bisphenol A
BHEPF: 9,9-bis-(4-(2-hydroxyethoxy)phenyl)fluorene
1,4-BHMB: 1,4-bis(2-hydroxymethyl)benzene
2,5-BHMF: 2,5-bis(hydroxymethyl)furan
2,6-BHMP: 2,6-bis(hydroxymethyl)pyridine
CHDM: 1,4-cyclohexanedimethanol
1,4-BD: 1,4-butanediol
DPC: diphenyl carbonate
$CaCl_2$: calcium chloride

**[Property measurement method]**

- Number average molecular weight (Mn, g/mol) and polydispersity index (PDI): Each of the polycarbonate copolymers prepared in the above Examples and Comparative Examples was dissolved in chloroform at a concentration of 1 to 3 % by weight, and then the number average molecular weight (Mn) and polydispersity index (PDI) were measured by using a gel permeation chromatography (GPC) device (Agilent). At that time, the column used was PLgel 5 μm MIXED-D 300 × 7.5 mm (Agilent), the column temperature was 35°C, the elution solvent used was chloroform, flowing at 0.5 mL/min, and polystyrene (Aldrich) was used as a standard material.
- Glass transition temperature (Tg): The glass transition temperature was measured by using a differential scanning calorimeter (DSC Q100, TA Instrument) with concrete conditions of the temperature raised from 20°C to 300°C at a heating rate of 10°C/min and then rapidly cooled to 20°C, and then raised again to 300°C.
- Tensile strength and elongation rate: The tensile strength and elongation rate were measured according to ASTM D638 using UTM (Instron 5967, Instron) at a speed of 5 mm/min. Concretely, the tensile strength and elongation were measured a total of 5 times for each sample prepared in Examples and Comparative Examples, and the

average value of the 5 measurement results for each sample was calculated.

- Biodegradability evaluation: Each of the polycarbonate copolymers obtained in the above Examples and Comparative Examples was processed into a film with a thickness of about 100 μm by using a hot press (mini test press-10, Toyoseiki), and the film was cut into a size of 8 cm width × 4 cm length to manufacture a sample for measuring biodegradability.

To measure the biodegradation under compost conditions, the sample for measuring biodegradability was buried in compost in a thermostatic bath maintained at a temperature of 50°C and humidity of 60%, and the biodegradability was measured at two-week intervals for six months. The compost and burial conditions used at that time followed the conditions below, and the biodegradability (%) was measured as the weight loss rate (%) of each sample as shown in the equation below, and the average value of the three (3) measurements for each sample was obtained.

[Biodegradability]

$$Weight\ loss\ rate\ according\ to\ biodegradation\ (\%) = \frac{Initial\ weight - Final\ weight}{Initial\ weight}\ x\ 100$$

[Compost and burial conditions]

Compost was prepared from the starter culture composition (Food Cleaner, Hanmi Flexible) of *Bacillus smithii* strain, a thermophilic bacterium for organic waste treatment, using a microbial fermentation and decomposition device (Linkle, Hanmi Flexible, Inc.). At that time, in order to maintain continuous microbial activity, the compost used to measure biodegradability was replaced with newly manufactured compost at one-week intervals.

In addition, to confirm the reliability of this biodegradability evaluation, the biodegradability was measured in the same manner as the above biodegradability evaluation method, using cellulose (α-cellulose, ≥98%) as a reference material. As a result, it was confirmed that weight loss began after 4 weeks, and that biodegradation progressed to an unrecoverable level after 10 weeks.

[Table 1]

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Moleratio | Diol compound | ISB | 0.05 | 0.05 | 0.05 | 0.05 | 0.1 | 0.1 | 0.2 | 0.2 | 0.4 | 0.4 | 0.25 | 0.25 |
| | | EI 1 | 0.05 | | | | | | | | | | | |
| | | EI 5 | | 0.05 | | | 0.2 | | | | 0.25 | | 0.4 | |
| | | EI 25 | | | | | | 0.2 | | | | | | |
| | | PI 1 | | | | | | | 0.1 | | | | | |
| | | PI 5 | | | 0.05 | | | | | 0.1 | | 0.25 | | 0.4 |
| | | PI 25 | | | | 0.05 | | | | | | | | |
| | | BPA(EO)2 | 0.9 | 0.9 | 0.9 | 0.9 | | | | | | | | |
| | | BPA | | | | | 0.7 | 0.7 | 0.7 | 0.7 | | | | |
| | | BHEPF | | | | | | | | | 0.35 | 0.35 | 0.35 | 0.35 |
| | | 1,4-BHMB | | | | | | | | | | | | |
| | | 2,5-BHMF | | | | | | | | | | | | |
| | | 2,6-BHMP | | | | | | | | | | | | |
| | Carbonic acid diester | DPC | 1.0 | 1.0 | 1.0 | 1.0 | 1.0 | 1.0 | 1.0 | 1.0 | 1.0 | 1.0 | 1.0 | 1.0 |
| Properties | Glass transition temperature (°C) | | 123 | 110 | 115 | 92 | 104 | 83 | 151 | 118 | 105 | 108 | 81 | 80 |
| | Tensile strength, average (MPa) | | 78.7 | 85.7 | 91.1 | 73.6 | 85.3 | 73.5 | 75.4 | 83.7 | 96.4 | 98.1 | 77.0 | 74.6 |
| | Elongation rate, average (%) | | 84.1 | 92.2 | 88.5 | 110.9 | 77.9 | 96.0 | 42.4 | 56.3 | 49.9 | 45.6 | 77.2 | 78.1 |
| | Biodegradability (%) | After 3 months | 4.8 | 8.3 | 7.2 | 13.8 | 16.1 | 19.3 | 5.6 | 8.9 | 17.6 | 13.3 | 27.9 | 23.7 |
| | | After 6 months | 6.8 | 15.2 | 13.9 | 28.0 | 30.5 | 33.4 | 7.3 | 16.8 | 32.2 | 24.5 | 43.6 | 40.3 |
| - Catalyst injection amount: 100 ppm of calcium chloride ($CaCl_2$) based on the total diol compound | | | | | | | | | | | | | | |

[Table 1] (continued)

| | | | Example | | | | | | | | | | |
|---|---|---|---|---|---|---|---|---|---|---|---|---|---|
| | | | 13 | 14 | 15 | 16 | 17 | 18 | 19 | 20 | 21 | 22 | 23 |
| Mole ratio | Diol compound | ISB | 0.55 | 0.55 | 0.55 | 0.55 | 0.005 | 0.005 | 0.3 | 0.3 | 0.05 | 0.1 | 0.4 |
| | | EI 1 | | | | | | | | | | | |
| | | EI 5 | 0.1 | | 0.1 | | 0.005 | | 0.2 | | 0.05 | | 0.25 |
| | | EI 25 | | | | | | | | | | | |
| | | PI 1 | | | | | | | | | | | |
| | | PI 5 | | 0.1 | | 0.1 | | 0.005 | | 0.2 | | 0.2 | |
| | | PI 25 | | | | | | | | | | | |
| | | BPA(EO)2 | 0.35 | 0.35 | | | 0.99 | | 0.5 | | | | |
| | | BPA | | | 0.35 | 0.35 | | 0.99 | | 0.5 | | | |
| | | BHEPF | | | | | | | | | | | |
| | | 1,4-BHMB | | | | | | | | | 0.9 | | |
| | | 2,5-BHMF | | | | | | | | | | 0.7 | |
| | | 2,6-BHMP | | | | | | | | | | | 0.35 |
| | Carbonic acid diester | DPC | 1.0 | 1.0 | 1.0 | 1.0 | 1.0 | 1.0 | 1.0 | 1.0 | 1.0 | 1.0 | 1.0 |
| Properties | Glass transition temperature (°C) | | 86 | 83 | 101 | 100 | 120 | 146 | 93 | 111 | 101 | 109 | 99 |
| | Tensile strength, average (MPa) | | 81.0 | 83.4 | 84.9 | 85.4 | 73.2 | 74.4 | 86.7 | 88.8 | 81.6 | 80.2 | 90.5 |
| | Elongation rate, average (%) | | 48.7 | 39.5 | 35.6 | 34.1 | 94.9 | 88.3 | 64.7 | 66.2 | 94.8 | 62.7 | 57.8 |
| | Biodegradability (%) | After 3 months | 14.9 | 13.2 | 12.1 | 10.2 | 4.5 | 2.9 | 17.1 | 14.2 | 6.9 | 9.4 | 16.7 |
| | | After 6 months | 26.1 | 21.8 | 24.5 | 22.2 | 9.9 | 6.8 | 30.8 | 28.3 | 14.1 | 18.9 | 35.3 |
| - Catalyst injection amount: 100 ppm of calcium chloride ($CaCl_2$) based on the total diol compound | | | | | | | | | | | | | |

[Table 2]

| | | | Comparative Example | | | | | | | |
|---|---|---|---|---|---|---|---|---|---|---|
| | | | 1 | 2 | 3 | 4 | 5 | 6 | 7 | 8 |
| Mole ratio | Diol compound | ISB | 0.1 | 0.1 | 0.1 | 0.3 | 0.3 | 0.3 | 0.005 | 0.005 |
| | | EI 1 | | | | | | | | |
| | | EI 5 | | | | | | | | |
| | | EI 25 | | | | | | | | |
| | | PI 1 | | | | | | | | |
| | | PI 5 | | | | | | | | |
| | | PI 25 | | | | | | | | |
| | | BPA(EO)2 | 0.9 | | | 0.7 | | | 0.995 | |
| | | BPA | | 0.9 | | | 0.7 | | | 0.995 |
| | | BHEPF | | | 0.9 | | | 0.7 | | |
| | | CHDM | | | | | | | | |
| | | 1,4-BD | | | | | | | | |
| | Carbonic acid diester | DPC | 1.0 | 1.0 | 1.0 | 1.0 | 1.0 | 1.0 | 1.0 | 1.0 |
| Properties | Glass transition temperature (°C) | | 118 | 141 | 168 | 120 | 146 | 158 | 117 | 142 |
| | Tensile strength, average (MPa) | | 68.1 | 59.7 | 61.2 | 70.0 | 62.1 | 63.8 | 60.4 | 56.5 |
| | Elongation rate, average (%) | | 73.9 | 70.4 | 10.2 | 22.4 | 20.1 | 2.5 | 74.1 | 71.5 |
| | Biodegradability (%) | After 3 months | 0 | 0 | 0 | 0 | 0 | 0 | 0 | 0 |
| | | After 6 months | 0 | 0 | 0 | 0 | 0 | 0 | 0 | 0 |
| - Catalyst injection amount: 100 ppm of calcium chloride ($CaCl_2$) based on the total diol compound | | | | | | | | | | |

[Table 2] (continued)

| | | | Comparative Example | | | | | | | |
|---|---|---|---|---|---|---|---|---|---|---|
| | | | 9 | 10 | 11 | 12 | 13 | 14 | 15 | 16 |
| Mole ratio | Diol compound | ISB | 0.0025 | 0.0025 | 0.67 | 0.67 | 0.08 | 0.08 | 0.9 | 0.9 |
| | | EI 1 | | | | | | | | |
| | | EI 5 | 0.0025 | | 0.01 | | 0.57 | | 0.05 | |
| | | EI 25 | | | | | | | | |
| | | PI 1 | | | | | | | | |
| | | PI 5 | | 0.0025 | | 0.01 | | 0.57 | | 0.05 |
| | | PI 25 | | | | | | | | |
| | | BPA(EO)2 | 0.995 | | 0.32 | | 0.35 | | | |
| | | BPA | | 0.995 | | 0.32 | | 0.35 | | |
| | | BHEPF | | | | | | | | |
| | | CHDM | | | | | | | 0.05 | |
| | | 1,4-BD | | | | | | | | 0.05 |
| | Carbonic acid diester | DPC | 1.0 | 1.0 | 1.0 | 1.0 | 1.0 | 1.0 | 1.0 | 1.0 |

(continued)

| | | | Comparative Example | | | | | | | |
|---|---|---|---|---|---|---|---|---|---|---|
| | | | 9 | 10 | 11 | 12 | 13 | 14 | 15 | 16 |
| Properties | Glass transition temperature (°C) | | 115 | 140 | 113 | 132 | 48 | 55 | 125 | 115 |
| | Tensile strength, average (MPa) | | 61.7 | 59.4 | 67.6 | 64.9 | 46.8 | 51.7 | 88.1 | 72.6 |
| | Elongation rate, average (%) | | 74.7 | 72.6 | 10.4 | 9.1 | 110.1 | 103.8 | 12.8 | 16.5 |
| | Biodegradability (%) | After 3 months | 1.9 | 1.3 | 2.5 | 2.2 | 32.9 | 30.2 | 3.0 | 14.4 |
| | | After 6 months | 4.1 | 3.5 | 5.7 | 4.0 | 56.7 | 46.3 | 4.9 | 27.2 |
| - Catalyst injection amount: 100 ppm of calcium chloride ($CaCl_2$) based on the total diol compound | | | | | | | | | | |

As shown in the above Table 1, the polycarbonate copolymers of Examples 1 to 23 according to the present invention comprised, as diol components, anhydrosugar alcohol, anhydrosugar alcohol-alkylene glycol and aromatic diol in the specific amount ranges, and thus showed such balanced good physical properties in terms of tensile strength, elongation, heat resistance, and biodegradability as high average tensile strength of 73.2 MPa or higher, and high average elongation rate of 34.1 % or higher, glass transition temperature of 80°C or higher, and high biodegradability of 6.8 % or higher after 6 months.

However, as shown in the above Table 2, the polycarbonate copolymers of Comparative Examples 1 to 8 showed poor average tensile strength of 70.0 MPa or lower and biodegradability of 0 %, i.e., no progress of biodegradation, and particularly, the polycarbonate copolymers of Comparative Examples 3 to 6 also showed poor average elongation rate of 22.4 % or lower. The polycarbonate copolymers of Comparative Examples 9 and 10 showed very poor average tensile strength of 61.7 MPa or lower and poor biodegradability of 4.1 % or lower after 6 months, as compared with the polycarbonate copolymers of Examples. The polycarbonate copolymers of Comparative Examples 11 and 12 showed poor average tensile strength of 67.6 MPa or lower and poor average elongation rate of 10.4 % or lower. The polycarbonate copolymers of Comparative Examples 13 and 14 showed very poor average tensile strength and very poor glass transition temperature, and the polycarbonate copolymers of Comparative Examples 15 and 16 showed very poor average elongation rate.

## Claims

**1.** A polycarbonate copolymer comprising:

repeating units derived from a diol component; and repeating units derived from a carbonic acid diester component;

wherein the diol component comprises, based on total 100 mol% of the diol component, (a) 0.3 to 66.9 mol% of anhydrosugar alcohol, (b) 0.3 to 56.9 mol% of anhydrosugar alcohol-alkylene glycol and (c) 32.1 to 99.4 mol% of aromatic diol.

**2.** The polycarbonate copolymer of claim 1, wherein the anhydrosugar alcohol is dianhydrohexitol.

**3.** The polycarbonate copolymer of claim 1, wherein the anhydrosugar alcohol is selected from isosorbide, isomannide, isoidide or mixture thereof.

**4.** The polycarbonate copolymer of claim 1, wherein the anhydrosugar alcohol-alkylene glycol is that obtained by addition reaction of anhydrosugar alcohol and alkylene oxide.

**5.** The polycarbonate copolymer of claim 4, wherein the alkylene oxide is a linear alkylene oxide having 2 to 18 carbons or a branched alkylene oxide having 3 to 18 carbons.

**6.** The polycarbonate copolymer of claim 1, wherein the aromatic diol is one or more selected from the group consisting of bisphenol-based diol compound, fluorine-based diol compound, benzene-based diol compound, furan-based diol compound, pyridine-based diol compound, or combination thereof.

7. The polycarbonate copolymer of claim 1, wherein the aromatic diol is one or more selected from the group consisting of bisphenol A, alkylene oxide adduct of bisphenol A, 9,9-bis-(4-(2-hydroxyethoxy)phenyl)fluorene, 1,4-bis(2-hydroxymethyl)benzene, 1,3-bis(2-hydroxymethyl)benzene, 1,4-bis(2-hydroxyethyl)benzene, 2,5-bis(hydroxymethyl)furan, 2,5-bis(hydroxyethyl)furan, 2,6-bis(hydroxymethyl)pyridine, or combination thereof.

8. The polycarbonate copolymer of claim 1, wherein the carbonic acid diester component is selected from dialkyl carbonate, diaryl carbonate, alkylene carbonate, or combination thereof.

9. The polycarbonate copolymer of claim 1, wherein the carbonic acid diester component is selected from the compounds represented by the following formula C:

[Formula C]

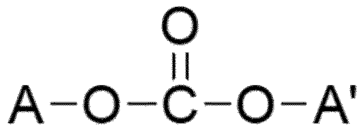

in the above formula C, each of A and A' is independently selected from unsubstituted or halogen-substituted, alkyl group having 1 to 20 carbon atoms, aryl group having 6 to 20 carbon atoms or aralkyl group having 7 to 25 carbon atoms, and A and A' may be the same or different from each other.

10. The polycarbonate copolymer of claim 1, which comprises repeating unit having a structure of the following formula 1; repeating unit having a structure of the following formula 2; and repeating unit having a structure of the following formula 3:

[Formula 1]

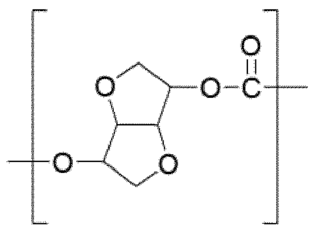

[Formula 2]

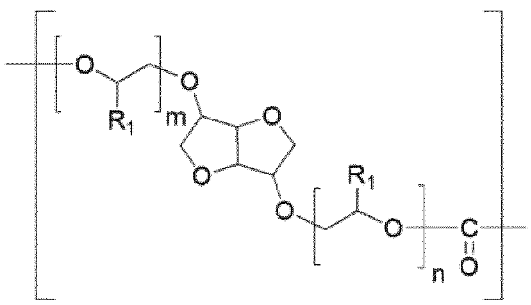

in the above formula 2,

each of $R_1$ independently represents hydrogen or an alkyl group, and
each of m and n independently represents an integer of 0 to 15, provided that m+n represents an integer of 1 to 25;

[Formula 3]

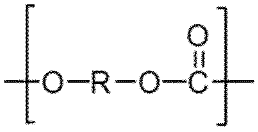

in the above formula 3,
R is an arylene group with 6 to 40 carbon atoms; or a heteroarylene group with 5 to 40 carbon atoms comprising one or more heteroatoms selected from the group consisting of N, O and S.

**11.** A method for preparing a polycarbonate copolymer, comprising:

reacting a mixture comprising a diol component and a carbonic acid diester component in the presence of polymerization catalyst,
wherein the diol component comprises, based on total 100 mol% of the diol component, (a) 0.3 to 66.9 mol% of anhydrosugar alcohol, (b) 0.3 to 56.9 mol% of anhydrosugar alcohol-alkylene glycol and (c) 32.1 to 99.4 mol% of aromatic diol.

**12.** A molded article comprising the polycarbonate copolymer of any one of claims 1 to 10.

**INTERNATIONAL SEARCH REPORT**

International application No.
**PCT/KR2022/021198**

**A. CLASSIFICATION OF SUBJECT MATTER**

**C08G 64/30**(2006.01)i; **C08G 64/14**(2006.01)i; **C08L 69/00**(2006.01)i

According to International Patent Classification (IPC) or to both national classification and IPC

**B. FIELDS SEARCHED**

Minimum documentation searched (classification system followed by classification symbols)

C08G 64/30(2006.01); B29B 9/02(2006.01); B29C 47/14(2006.01); C07D 493/04(2006.01); C08G 64/16(2006.01); C08G 64/34(2006.01); C08G 65/28(2006.01); C08K 7/14(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이소소르비드(isosorbide), 비스페놀 A(bisphenol A), 폴리카보네이트 (polycarbonate)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0082290 A (SAMYANG CORPORATION) 05 July 2021 (2021-07-05)<br>See claims 1-14; and paragraph [0047]. | 1-12 |
| Y | JP 2010-037551 A (TOYOTA CENTRAL R&D LABS INC.) 18 February 2010 (2010-02-18)<br>See claims 1-14; and paragraph [0108]. | 1-12 |
| A | JP 2021-134266 A (TEIJIN LTD.) 13 September 2021 (2021-09-13)<br>See paragraphs [0029], [0033], [0035] and [0063]. | 1-12 |
| A | KR 10-2015-0023573 A (SABIC GLOBAL TECHNOLOGIES B.V.) 05 March 2015 (2015-03-05)<br>See claims 1 and 3; and paragraph [0041]. | 1-12 |
| A | KR 10-2014-0009421 A (MITSUBISHI CHEMICAL CORPORATION) 22 January 2014 (2014-01-22)<br>See claims 1, 20, 23 and 25; and paragraphs [0114] and [0126]. | 1-12 |

✓ Further documents are listed in the continuation of Box C. ✓ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 March 2023** | **29 March 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2022/021198**

**C. DOCUMENTS CONSIDERED TO BE RELEVANT**

| Category* | Citation of document, with indication, where appropriate, of the relevant passages | Relevant to claim No. |
|---|---|---|
| A | JP 2015-209387 A (SANYO CHEM IND. LTD.) 24 November 2015 (2015-11-24) See claims 1 and 2; and paragraphs [0002] and [0008]. | 1-12 |

Form PCT/ISA/210 (second sheet) (July 2022)

**INTERNATIONAL SEARCH REPORT**
**Information on patent family members**

International application No.
**PCT/KR2022/021198**

| Patent document cited in search report | Publication date (day/month/year) | Patent family member(s) | Publication date (day/month/year) |
|---|---|---|---|
| KR 10-2021-0082290 A | 05 July 2021 | WO 2021-133048 A1 | 01 July 2021 |
| JP 2010-037551 A | 18 February 2010 | EP 2143751 A1 | 13 January 2010 |
| | | EP 2143751 B1 | 16 November 2011 |
| | | JP 5347778 B2 | 20 November 2013 |
| JP 2021-134266 A | 13 September 2021 | None | |
| KR 10-2015-0023573 A | 05 March 2015 | CN 104428343 A | 18 March 2015 |
| | | CN 104428343 B | 10 May 2017 |
| | | EP 2864391 A1 | 29 April 2015 |
| | | EP 2864391 B1 | 19 December 2018 |
| | | US 2013-0345347 A1 | 26 December 2013 |
| | | US 9193864 B2 | 24 November 2015 |
| | | WO 2013-190474 A1 | 27 December 2013 |
| KR 10-2014-0009421 A | 22 January 2014 | CN 103476558 A | 25 December 2013 |
| | | JP 2012-214770 A | 08 November 2012 |
| | | JP 2012-214771 A | 08 November 2012 |
| | | JP 5962129 B2 | 03 August 2016 |
| | | JP 6019667 B2 | 02 November 2016 |
| | | WO 2012-133855 A1 | 04 October 2012 |
| JP 2015-209387 A | 24 November 2015 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020090018788
- KR 101080669